# EUROPÄISCHE PATENTSCHRIFT

(11) **EP 4 064 821 B1**
(45) Veröffentlichungstag und Bekanntmachung des Hinweises auf die Patenterteilung: **12.03.2025**
(21) Anmeldenummer: 20807038.3
(22) Anmeldetag: 19.11.2020
(51) Int. Cl.: A01D 34/73

(54) **SCHNEIDELEMENT, VERWENDUNG DAVON UND MOBILE SCHNEIDEVORRICHTUNG DAMIT**
CUTTING ELEMENT, USE THEREOF AND MOBILE CUTTING DEVICE USING THE SAME
ÉLÉMENT DE COUPE, UTILISATION CORRESPONDANTE ET DISPOSITIF DE COUPE MOBILE CORRESPONDANT

(30) Priorität: 25.11.2019 EP 19211203
(43) Veröffentlichungstag der Anmeldung: 05.10.2022
(73) Patentinhaber: Ceratizit Luxembourg Sàrl, 8232 Mamer (LU)
(72) Erfinder: MAGIN, Michael, 8232 Mamer (LU); PIERCE, Gregory, 8232 Mamer (LU); STECKLER, Romain, 8232 Mamer (LU)
(74) Vertreter: Ciesla, Dirk
(86) Internationale Anmeldenummer: PCT/EP2020/082645
(87) Internationale Veröffentlichungsnummer: WO 2021/104979

(56) Entgegenhaltungen:
- EP-A1- 2 810 548
- WO-A1-2019/096539
- JP-U- H04 106 925
- US-A1- 2014 013 915
- US-A1- 2014 130 473

## Beschreibung

Die vorliegende Erfindung betrifft ein Schneidelement, welches derart ausgebildet ist, dass damit Grashalme oder andere organische Halmmaterialien an einer Vegetationsfläche geschnitten werden können, umfassend einen Grundkörper, der durch ein Grundkörpermaterial gebildet ist, und an gegenüberliegenden Seiten des Grundkörpers ausgebildete Schneidkörper.

Die vorliegende Erfindung betrifft ferner eine Verwendung eines Schneidelements zum Schneiden von Grashalmen oder anderen organische Halmmaterialien an einer Vegetationsfläche.

Schließlich betrifft die vorliegende Erfindung eine mobile Schneidevorrichtung, insbesondere einen Mähdrescher oder Mähroboter, umfassend einen Rotor und mindestens ein daran derart befestigtes Schneidelement, dass durch eine Drehung des Rotors Grashalme oder andere organische Halmmaterialien an einer Vegetationsfläche durch das Schneidelement geschnitten werden können.

Ein Schneidelement der eingangs genannten Art ist zum Beispiel in Form eines Rasenmähermessers aus der EP 3 273 766 A1 vorbekannt, also als Schneidelement zum Schneiden von Grashalmen. Diese lassen sich durch ein solches Schneidelement schneiden, die entsprechenden Pflanzenfasern werden also geschnitten, und so von der Vegetationsfläche, also in diesem Falle einer Rasenfläche, getrennt. Dies ist etwas anderes als das Zerspanen von Metallen oder dergleichen, wo im Sinne eines Pflugs und damit eines dementsprechend geformten, anderen Schneidelements in ein Metall eingedrungen wird, um einen Span zu erzeugen. Der entsprechende Schneidkörper der dafür geeigneten Schneidelemente ist daher eher stumpf und üblicherweise für die Spanabfuhr optimiert. Beim Schneiden von Grashalmen und der anderen organischen Halmmaterialien kommt es hingegen vielmehr auf die Schärfe der Schneidkörper an, um einen sauberen Schnitt zu erzeugen.

Bei dem vorbekannten Rasenmähermesser ist ein Überlastschutz durch einen Langschlitz realisiert, in welchem ein Zapfen eines Rotors exzentrisch eingreift. Das Rasenmähermesser kann folglich bei einem Zusammenstoß mit einem Stein um den Zapfen geschwenkt werden und entlang von diesem gleiten. Nach einer solchermaßen realisierten Drehung ist sodann ein anderer seiner Schneidkörper zum Schneiden der Grashalme schneidaktiv angeordnet, ohne dass die Drehrichtung des Rotors, welcher das Rasenmähermesser antreibt, geändert werden muss.

JP H04 106925 U betrifft ein Schneidwerkzeug, das an einem Rasenmäher befestigt ist.

US 2014/130473 A1 betrifft eine Drehgerät, das einen metallischen Körper umfasst.

EP 2 810 548 A1 betrifft ein Schneidelement für eine Mähmaschine.

WO 2019/096539 A1 betrifft ein Schneidwerkzeug mit einem Schneidenbereich aus einem Hartmetall.

US 2014/013915 A1 betrifft eine Stahlplatte für ein bandförmiges Stanzmesser.

Das Bruchrisiko wird dementsprechend reduziert. Dies ändert aber nichts daran, dass die Schneidkörper des vorbekannten Rasenmähermessers dem üblichen Verschleiß beim Schneiden der Grashalme und anderen organischen Halmmaterialien unterliegen.

Die Aufgabe der vorliegenden Erfindung besteht daher darin, ein Schneidelement der eingangs genannten Art, eine Verwendung der eingangs genannten Art sowie eine mobile Schneidevorrichtung, insbesondere einen Mähdrescher oder Mähroboter, der eingangs genannten Art mit jeweils einer gegenüber dem Stand der Technik höheren Lebensdauer im Bereich des Schneidkörpers oder der Schneidkörper bereitzustellen.

Die Aufgabe wird durch ein Schneidelement nach Anspruch 1 gelöst. Vorteilhafte Weiterbildungen davon werden in den von Anspruch 1 abhängigen Ansprüchen angegeben.

Das Schneidelement, welches derart ausgebildet ist, dass damit Grashalme oder andere organische Halmmaterialien an einer Vegetationsfläche geschnitten werden können, umfasst einen Grundkörper, der durch ein Grundkörpermaterial gebildet ist, und an gegenüberliegenden Seiten des Grundkörpers ausgebildete Schneidkörper, wobei mindestens einer der Schneidkörper durch ein Schneidkörpermaterial gebildet ist, das von dem Grundkörpermaterial verschieden ist, gesintert ist und gegenüber dem Grundkörpermaterial härter, wobei das gesinterte Schneidkörpermaterial durch ein Hartmetall oder Cermet gebildet ist und die höhere Härte davon auf Hartstoffpartikeln darin basiert.

Dies ist vorteilhaft, weil ein solches Schneidelement dort, wo es auf eine Reduzierung des Verschleißes ankommt, also im Bereich eines der Schneidkörper, hart ist, und dort wo es zur Bruchvermeidung auf eine entsprechende Nachgiebigkeit des Schneidelements ankommt, also im Bereich des Grundkörpers, weicher ist. Durch letztere Maßnahme wird eine Dämpfung von Kollisionsenergie bereitgestellt.

Hartmetall (cemented carbide) und Cermet sind jeweils Verbundwerkstoffe, bei denen die Hartstoffpartikel, die den überwiegenden Bestandteil des Verbundwerkstoffs ausmachen, eine Skelett- oder Gerüststruktur bilden, deren Zwischenräume durch einen demgegenüber duktileren metallischen Binder gefüllt sind. Die Hartstoffpartikel können dabei insbesondere zumindest überwiegend durch Wolframkarbid, Titankarbid und/oder Titankarbonitrid gebildet sein, wobei in geringeren Mengen zusätzlich z. B. auch andere Hartstoffpartikel, insbesondere Karbide der Elemente der Gruppen IV bis VI des Periodensystems, vorhanden sein können. Der duktile metallische Binder besteht üblicherweise zumindest überwiegend aus Cobalt, Nickel, Eisen oder einer Basislegierung von zumindest einem dieser Elemente. Es können allerdings in geringeren Mengen auch noch andere Elemente in dem metallischen Binder gelöst sein. Unter einer Basislegierung ist dabei zu verstehen, dass dieses Element den überwiegenden Bestandteil der Legierung bildet. Am häufigsten kommt Hartmetall zum Einsatz, bei dem die Hartstoffteilchen zumindest überwiegend durch Wolframkarbid gebildet sind und der metallische Binder eine Cobalt- oder Cobalt-Nickel-Basislegierung ist; der Gewichtsanteil der entsprechenden Wolframkarbid-Partikel dabei insbesondere mindestens 70 Gewichtsprozent, vorzugsweise mehr als 80 Gewichtsprozent.

Skelettstruktur heißt im Sinne der vorliegenden Offenbarung, dass die Hartstoffpartikel, zum Beispiel durch im Wesentlichen Wolframkarbid gebildete Hartstoffpartikel, ein zusammenhängendes Partikelnetzwerk bilden, wo ein beliebiges Hartstoffpartikel mindestens ein anderes Hartstoffpartikel berührt.

Es ist besonders vorteilhaft, wenn mindestens zwei der Schneidkörper aus dem gesinterten Schneidkörpermaterial bestehen, weil dies den Verschleiß noch weiter reduziert, zum Beispiel bei einer Umkehr der Schnittrichtung des Schneidelements. Letzteres ist dadurch möglich, dass die gesinterten Schneidkörper an den gegenüberliegenden Seiten ausgebildet sind. Noch bevorzugter sind die Schneidkörper an allen der gegenüberliegenden Seiten des Grundkörpers aus dem gesinterten Schneidkörpermaterial, also dem Hartmetall oder Cermet, gebildet.

Der Grundkörper ist vorteilhafterweise plattenförmig und hat einen gegenüber den Schneidkörpern in einer Plattenebene des Grundkörpers bemessenen größeren Flächeninhalt, weil dies das Bruchrisiko des gesinterten Schneidkörpers, also dem Hartmetall oder Cermets, noch weiter reduziert. Denn dementsprechend wird durch den Grundkörper in der Schnittebene eine hinreichende Dämpfung des gesinterten Schneidkörpers aus dem Hartmetall oder Cermet bereitgestellt, wenn dieser gegen eine hartes Objekt, zum Beispiel einen Stein, stößt.

Mit den Begriffen "gegenüberliegende Seiten" und dergleichen sind im Sinne der vorliegenden Offenbarung insbesondere die Seiten des Grundkörpers gemeint, welche parallel oder schräg gegenüber voneinander liegen, etwa die entsprechenden Seiten eines Quadrats, Rechtecks, Dreiecks, Trapezes oder Parallelogramms und auch die Seiten von Formen, welche den genannten Formen im Wesentlichen entsprechen.

Mit dem Begriff Härte ist der Widerstand gegen das Eindringen eines härteren Prüfkörpers in das Schneidkörpermaterial und das Grundkörpermaterial gemeint.

Indem der mindestens eine Schneidkörper gesintert ist, kann er in vorteilhafter Weise von dem Grundkörper unabhängig geformt werden, weil sich der entsprechende Grünkörper vor dem Sintern formen lässt, wodurch zusätzlich zur Reduktion des Verschleißes die Schnittleistung durch Anpassung der Geometrie des Schneidkörpers verbessert wird. Dies im Unterschied zu einem Auftragen des Schneidkörpers durch ein Abscheidungsverfahren, wonach der Schneidkörper die Form des Grundkörpers im Bereich der Seite erbt, an welcher er ausgebildet werden soll.

Dadurch, dass die Schneidkörper an den gegenüberliegenden Seiten des Grundkörpers ausgebildet sind, ist der gesinterte Schneidkörper aus dem Hartmetall oder Cermet bei einer Schnittbewegung des Schneidelements schneidaktiv und ist ein anderer der Schneidkörper, welcher optional durch das gesinterte Schneidkörpermaterial gebildet ist, dabei schneidpassiv, wobei bei einer Umkehr der Schnittbewegung der gesinterte Schneidkörper aus dem Hartmetall oder Cermet schneidpassiv ist und der andere Schneidkörper schneidaktiv. Das Schneidelement kann nach der vorliegenden Offenbarung also die Grashalme oder das andere organische Halmmaterial in zwei verschiedene Schnittrichtungen schneiden, zum Beispiel im Uhrzeigersinn und umgekehrt dazu. Dadurch, dass die Schneidkörper an den gegenüberliegenden Seiten ausgebildet sind, ist der gesinterte Schneidkörper aus dem Hartmetall oder Cermet bei der Schnittbewegung schneidaktiv und ein anderer der Schneidkörper, welcher optional durch das gesinterte Schneidkörpermaterial gebildet ist, dabei schneidpassiv, wobei bei einer Veränderung einer Einbaulage des Schneidelements und bei einer Beibehaltung der Schnittbewegung der gesinterte Schneidkörper aus dem Hartmetall oder Cermet schneidpassiv ist und der andere Schneidkörper schneidaktiv. Die Einbaulage kann durch eine Drehung des Grundkörpers realisiert werden, bei der eine ursprüngliche Unterseite dessen nach oben und eine ursprüngliche Oberseite dessen nach unten gedreht wird, der Grundkörper also gewendet wird, und zwar um eine Drehachse, die in der Schnittebene liegt. Alternativ oder ergänzend dazu kann die Einbaulage durch eine zentrische oder exzentrische Drehung des Grundkörpers bezüglich eines Massenmittelpunktes des Grundkörpers realisiert werden, also durch eine Drehung um eine Achse senkrecht zu der Schnittebene. Im letzteren Fall wird der Grundkörper durch die Drehung in eine Längsbewegung versetzt, etwa im Sinne eines Exzenters, so dass die beiden Einbaulagen symmetrisch zueinander sind, wie dies auch bei der zentrischen Drehung ohne Längsbewegung des Grundkörpers möglich ist.

Mit den anderen organischen Halmmaterialien sind insbesondere andere Süßgräser, wie zum Beispiel Getreide, davon insbesondere Weizen, Roggen, Gerste, Hafer und Mais, aber auch Zuckerrohr sowie Schilf und dergleichen gemeint.

Gemäß einer Weiterbildung des Schneidelements sind die Hartstoffpartikel des Hartmetalls im Wesentlichen durch Wolframkarbid gebildet. Hierbei handelt es in vorteilhafterweise um ein besonders hartes Material, was den Verschleiß noch weiter reduziert und damit die Lebensdauer erhöht. Vorzugsweise liegt der Gewichtsanteil der entsprechenden Wolframkarbid-Partikel, welche auch als Wolframkarbid-Körner bezeichnet werden können, in Bezug auf die Gesamtzusammensetzung des gesinterten Schneidkörpermaterials aus dem Hartmetall im Bereich von einschließlich 70 Gewichtsprozent bis einschließlich 99 Gewichtsprozent, noch mehr bevorzugter von einschließlich 80 Gewichtsprozent bis einschließlich 99 Gewichtsprozent, am meisten bevorzugt von einschließlich 85 Gewichtsprozent bis einschließlich 99 Gewichtsprozent; denkbar und auch möglich ist auch ein Bereich von 88 Gewichtsprozent bis einschließlich 99 Gewichtsprozent. Denkbar und auch möglich sind aber auch andere zusätzliche Hartstoffpartikel, welche durch Karbide oder Karbonitride von Metallen der Gruppen IV bis VI des Periodensystems gebildet sind.

Gemäß einer Weiterbildung des Schneidelements ist ein Binder in Zwischenräumen zwischen den Hartstoffpartikeln des Hartmetalls oder Cermets durch Cobalt, Nickel und/oder Eisen oder eine Basislegierung eines dieser Elemente gebildet. Basislegierung eines Metalls bedeutet dabei, dass dieses Metall den Hauptbestandteil der Legierung bildet. Neben den genannten Elementen können noch weitere Elemente in geringeren Mengen in dem Binder gelöst sein.

Gemäß einer Weiterbildung des Schneidelements ist der gesinterte Schneidkörper aus dem Hartmetall oder Cermet mit dem Grundkörper stoffschlüssig verbunden. Dies ist vorteilhaft, weil der gesinterte Schneidkörper aus dem Hartmetall oder Cermet durch Lösen der entsprechenden Verbindung gegen einen anderen, analog aufgebauten Schneidkörper ausgetauscht werden kann, wenn trotz der erhöhten Verschleißbeständigkeit ein solcher Austausch erforderlich sein sollte. Mit stoffschlüssig ist zum Beispiel gemeint, dass der gesinterte Schneidkörper aus dem Hartmetall oder Cermet an die Seite des Grundkörpers gelötet, geklebt oder geschweißt ist.

Gemäß einer Weiterbildung des Schneidelements ist der gesinterte Schneidkörper aus dem Hartmetall oder Cermet mit dem Grundkörper stoffschlüssig verbunden, indem zumindest das Grundkörpermaterial durch Einwirkung eines Energiestrahls aufgeschmolzen wurde. Dadurch wird eine besonders stabile Verbindung des Schneidkörpers mit dem Grundkörper bereitgestellt. Bei dem Energiestrahl kann es sich zum Beispiel um einen Laserstrahl oder einen Elektronenstrahl handeln.

Gemäß einer Weiterbildung des Schneidelements weist der gesinterte Schneidkörper aus dem Hartmetall oder Cermet einen Keilwinkel auf, welcher kleiner oder gleich 60° und größer 0° ist, vorzugsweise kleiner oder gleich 45° und größer oder gleich 15°. Dadurch wird der gesinterte Schneidkörper aus dem Hartmetall oder Cermet besonders schnittscharf ausgebildet; offenbart sind hier auch die Einzelwerte dieser Bereiche, also sämtliche Keilwinkel von größer 0° bis einschließlich 60°. Die dadurch gebildete Schneidkante des gesinterten Schneidkörpers aus dem Hartmetall oder Cermet kann symmetrisch, im Querschnitt davon als gleichseitiges oder gleichschenkliges Dreieck geformt, oder asymmetrisch, im Querschnitt davon zum Beispiel als rechtwinkliges Dreieck geformt, sein. Symmetrische Schneidkanten sind besonders schnittstabil, asymmetrische hingegen besonders schnittscharf.

Gemäß einer Weiterbildung des Schneidelements haben die Hartstoffpartikel eine mittlere Korngröße von 0,5 µm bis 2 µm, vorzugsweise 0,8 µm bis 1,3 µm. Dies ist gerade für das Schneiden der Grashalme oder der anderen organischen Halmmaterialien an der Vegetationsfläche vorteilhaft, weil der Korngrößenbereich von 0,5 µm bis 2 µm, vorzugsweise 0,8 µm bis 1,3 µm, das Schneidkörpermaterial härter und verschleißbeständiger macht sowie die Bruchspannung erhöht. Das Schneidkörpermaterial kann also dadurch schnittschärfer hergestellt werden, also die Grashalme präziser schneiden, und länger schnittscharf bleiben. Dies wird noch weiter verbessert, wenn die Hartstoffpartikel des Hartmetalls im Wesentlichen durch Wolframkarbid gebildet sind. Der Gewichtsanteil der Wolframkarbid-Partikel kann dabei insbesondere im Bereich von einschließlich 70 Gewichtsprozent bis einschließlich 99 Gewichtsprozent liegen, noch mehr bevorzugter von einschließlich 80 Gewichtsprozent bis einschließlich 99 Gewichtsprozent, am meisten bevorzugt von einschließlich 85 Gewichtsprozent bis einschließlich 99 Gewichtsprozent; denkbar und auch möglich ist auch ein Bereich von 88 Gewichtsprozent bis einschließlich 99 Gewichtsprozent.

Im Wesentlichen durch Wolframkarbid gebildet heißt im Sinne der vorliegenden Offenbarung, dass mindestens 90 % der Hartstoffpartikel durch Wolframkarbid gebildet sind, vorzugsweise 95 %, am meisten bevorzugt 99 %. Analoges gilt für die Fälle, in denen die Hartstoffpartikel durch eine andere Hartstoffphase im Wesentlichen gebildet sind.

Die Korngröße wird in der vorliegenden Offenbarung als "linear intercept length" gemäß dem internationalen Standard ISO 4499-2:2008(E) gemessen. Als Grundlage dienten EBSD-Aufnahmen (EBSD, electron back-scatter diffraction). Die Messmethodik an solchen Aufnahmen ist zum Beispiel beschrieben in: K.P. Mingard et al., Comparison of EBSD and conventional methods of grain size measurement of hard metals", Int. Journal of Refractory Metals & Hard Materials 27 (2009) 213-223.

Gemäß einer Weiterbildung des Schneidelements ist der gesinterte Schneidkörper aus dem Hartmetall oder Cermet als einstückige Schneidleiste ausgebildet, welche sich im Wesentlichen entlang der gesamten Seite des Grundkörpers erstreckt, an welcher sie ausgebildet ist. Hierbei handelt es sich um eine besonders zweckmäßige Maßnahme, die die Schnittleistung erhöht. Vorzugsweise ist mindestens der Schneidkörper, der der solchermaßen gebildeten Schneidleiste gegenüberliegt, ebenfalls aus dem gesinterten Schneidkörpermaterial, also dem Hartmetall oder Cermet, gebildet und als eine solche Schneidleiste ausgeformt.

Gemäß einer Weiterbildung des Schneidelements ist mindestens eine der Seiten des Grundkörpers im Wesentlichen gerade ausgebildet, in Blickrichtung auf diese von außen konkav ausgebildet oder mit der ihr gegenüberliegenden Seite des Grundkörpers eine V-Form bildend, wobei der gesinterte Schneidkörper aus dem Hartmetall oder Cermet an der so geformten Seite ausgebildet ist. Hierbei handelt es sich um besonders zweckmäßige Formen des Grundkörpers bzw. des gesinterten Schneidkörpers aus dem Hartmetall oder Cermet. Im Falle der konkaven Seite und der V-Form kann in vorteilhafterweise die Masse des Schneidelements reduziert werden. Dies erhöht die Lebensdauer, weil die Kollisionsenergie bei einer Kollision des Schneidelements mit einem Stein oder dergleichen dementsprechend reduziert wird. Zwei der gegenüberliegenden Seiten des Grundkörpers können aber auch im Wesentlichen parallel zueinander liegend ausgebildet sein, wobei der gesinterte Schneidköper an einer dieser Seiten ausgebildet ist.

Gemäß dieser Weiterbildung des Schneidelements ist der Grundkörper im Fall der V-Form zum Beispiel im Wesentlichen dreieckförmig ausgebildet, ist eine im Grundkörper vorgesehene Ausnehmung, in welche ein Zapfen eines Rotors eingreifen kann, im Wesentlichen dreieckförmig ausgebildet, sind die Ecken der Ausnehmung abgerundet und sind diese um einen Schwerpunkt des Grundkörpers symmetrisch angeordnet.

Gemäß einer Weiterbildung des Schneidelements ist das Grundkörpermaterial durch einen Stahl gebildet. Dies ist vorteilhaft, weil Stahl eine besonders gute Kombination von Duktilität, Zähigkeit und Festigkeit aufweist und damit das Bruchrisiko des gesinterten Schneidkörpermaterials unter Beibehaltung einer hinreichenden Formstabilität des Schneidelements reduziert, insbesondere wenn dessen Hartstoffpartikel durch Wolframkarbid gebildet sind und der Binder durch Cobalt, Nickel und/oder Eisen oder eine Basislegierung eines dieser Elemente gebildet ist. Dabei ist Cobalt oder die Basislegierung davon besonders vorteilhaft.

Gemäß einer Weiterbildung des Schneidelements weist der Grundkörper mindestens eine Ausnehmung auf, welche zur Befestigung des Schneidelements an einem Rotor ausgebildet ist. Dadurch kann das Schneidelement in vorteilhafterweise mit einer mobilen Schneidevorrichtung, zum Beispiel einem Mähdrescher, mobilen Mähroboter oder einer handgeführten anderen Schneidevorrichtung, welche den Rotor aufweisen, betrieben werden. Die Ausnehmung kann dabei durch eine oder mehrere Bohrungen gebildet werden, welche den Grundkörper durchbricht bzw. durchbrechen, so dass ein Zapfen des Rotors durch das Schneidelement gesteckt werden kann, wobei das Schneidelement dabei insbesondere freidrehbar mit dem Zapfen im Eingriff steht, und zwar gegenüber dem Schwerpunkt des Schneidelements exzentrisch. Das Schneidelement kann dadurch durch die Fliehkraft nach außen ausgerichtet werden, welche durch eine Drehung des Rotors hervorgerufen wird. Wenn mehrere der Ausnehmungen vorgesehen sind, zum Beispiel zwei, drei, vier oder fünf, insbesondere im Falle von entsprechenden Bohrungen, ist es daher zweckmäßig, wenn diese exzentrisch und zugleich um einen Schwerpunkt des Schneidelements symmetrisch angeordnet sind. Wenn eine Ausnehmung gebildet ist, kann diese durch mehrere Bohrungen gebildet werden, welche sich in einem Schwerpunkt des Schneidelements schneiden.

Gemäß einer Weiterbildung des Schneidelements ist die Ausnehmung zwischen zwei der gegenüberliegenden Seiten des Grundkörpers ausgebildet, wobei der gesinterte Schneidkörper aus dem Hartmetall oder Cermet an einer dieser Seiten ausgebildet ist. Dadurch kann in vorteilhafterweise die Masse des Schneidelements reduziert werden, weil ein separater Bereich, zum Beispiel in Form eines Vorsprungs des Grundkörpers, dafür vermieden wird. Dies reduziert die Kollisionsenergie und erhöht damit die Lebensdauer.

Denkbar und auch möglich ist es aber auch, dass bei einer anderen Weiterbildung dieser Vorsprung realisiert wird, wonach die Ausnehmung oder mindestens eine davon außerhalb der gegenüberliegenden Seiten, an welchen die Schneidkörper ausgebildet sind, darin ausgebildet ist. Daran ist vorteilhaft, dass die effektive Schnittlänge in Längsrichtung des Schneidkörpers bzw. der Schneidkörper erhöht wird.

Gemäß einer Weiterbildung des Schneidelements weist die Ausnehmung mindestens zwei abgerundete Bereiche auf, ist durch die abgerundeten Bereiche jeweils ein Drehlager zur Drehung des Schneidelements um einen Zapfen des Rotors gebildet, sind die abgerundeten Bereiche durch eine davon verschieden ausgeformte Verbindungsseite der Ausnehmung miteinander verbunden und ist der gesinterte Schneidkörper aus dem Hartmetall oder Cermet an der Seite des Grundkörpers ausgebildet, die der Verbindungseite oder einem der abgerundeten Bereiche gegenüberliegt. Dadurch kann einerseits das Schneidelement in besonders vorteilhafterweise um den Zapfen gedreht werden, um dieses durch Fliehkraft auszurichten und zugleich gegenüber einer Kollision des gesinterten Schneidkörpers aus dem Hartmetall oder Cermet mit einem harten Objekt nachgiebig daran zu lagern, was im letzteren Falle die Lebensdauer erhöht. Andererseits können das Schneidelement und damit der Grundkörper an dem Zapfen von dem einen abgerundeten Bereich zu dem anderen abgerundeten Bereich entlang der verschieden ausgeformten Seite der Ausnehmung gleiten. Dadurch wird bei einer Kollision des gesinterten Schneidkörpers aus dem Hartmetall oder Cermet mit einem Stein bei einer Drehung des Rotors ein Teil der Drehbewegung des Schneidkörpers in eine Translationsbewegung davon umgesetzt, etwa im Sinne eins Exzenters. Nach einer ganzen Drehung um den Zapfen ist danach der gesinterte Schneidkörper aus dem Hartmetall oder Cermet schneidpassiv und ein diesem gegenüberliegender Schneidkörper, welcher ebenfalls durch das gesinterte Schneidkörpermaterial gebildet sein kann, schneidaktiv, oder umgekehrt. Besonders vorteilhaft ist es dabei, wenn die so geformte Ausnehmung um den Schwerpunkt des Schneidelements symmetrisch ausgebildet ist, etwa symmetrisch im Sinne einer Drehung um 180°, 90° oder noch höheren Rotationssymmetrie, nach einer entsprechenden Drehung die Ausnehmung also mit sich selbst in Deckung gebracht wird; die Drehachse durchstößt dabei den Schwerpunkt des Schneidelements und steht senkrecht zur Schnittebene.

Einer der bzw. die abgerundeten Bereiche bilden das jeweilige Drehlager insbesondere dadurch, dass diese den Zapfen abschnittsweise umfänglich flächig umgeben.

Ein Zapfen wird zum Beispiel durch ein zylindrisches Element im Sinne der vorliegenden Offenbarung gebildet, ein Rotor zum Beispiel durch einen scheibenförmigen Körper, wo der Zapfen exzentrisch mit diesem verbunden ist und eine bestimmungsgemäße Drehachse diesen Körper senkrecht zur einer Scheibenebene zentrisch durchstößt. Wenn der Zapfen zylindrisch ist, ist der bzw. sind die abgerundeten Bereiche vorzugsweise von innerhalb der Ausnehmung aus betrachtet einer solchen Form folgend ausgebildet.

Gemäß einer Weiterbildung des Schneidelements ist die Verbindungsseite in Blickrichtung auf diese konvex gebogen und liegt einer der abgerundeten Bereiche der Seite des Grundkörpers gegenüber, an der der gesinterte Schneidkörper aus dem Hartmetall oder Cermet ausgebildet ist. Danach kann der Zapfen also entlang der konvexen Verbindungsseite gleiten. Dies ist besonders vorteilhaft, wenn der Grundkörper im Wesentlichen dreieckig ist, von den abgerundeten Bereichen drei vorgesehen sind und dementsprechend diese durch insgesamt drei der konvexen Verbindungsseiten verbunden sind, die Ausnehmung also die Gestalt eines Dreiecks mit abgerundeten Ecken und von innen betrachtet konvexen Seiten hat. Denn dadurch können insgesamt drei der Schneidkörper an den gegenüberliegenden Seiten des Grundkörpers ausgebildet sein, von denen mindestens einer der gesinterte Schneidkörper aus dem Hartmetall oder Cermet ist, und im Kollisionsfalle von einer schneidaktiven Position in eine schneidpassive Position zum Schutze dieser wechseln, weil die Ausnehmung für eine entsprechende Dreh- und Längsbewegung ausgebildet ist. Besonders vorteilhaft ist es dabei, wenn die so geformte Ausnehmung um den Schwerpunkt des Schneidelements symmetrisch ausgebildet ist.

Gemäß einer Weiterbildung des Schneidelements ist die Verbindungsseite im Wesentlichen gerade und liegt der Seite des Grundkörpers gegenüber, an der der gesinterte Schneidkörper aus dem Hartmetall oder Cermet ausgebildet ist. Danach kann der Zapfen also entlang der geraden Verbindungsseite gleiten. Dies ist besonders vorteilhaft, wenn der Grundkörper im Wesentlichen rechteckig oder quadratisch ist, von den abgerundeten Bereichen zwei vorgesehen sind und dementsprechend diese durch insgesamt zwei der geraden Verbindungsseiten verbunden sind, die Ausnehmung also die Gestalt eines Rechtecks oder Quadrats mit abgerundeten Ecken und geraden Seiten hat. Im Falle des Rechtecks ist die Ausnehmung demnach länglich ausgebildet, etwa im Sinne einer Längsbohrung mit abgerundeten Ecken. In beiden Fällen verlaufen die geraden Verbindungsseite vorzugsweise im Wesentlichen parallel zu der Seite des Grundkörpers, an der gesinterte Schneidkörper aus dem Hartmetall oder Cermet ausgebildet ist. In beiden Fällen können insgesamt zwei der Schneidkörper an zwei der gegenüberliegenden Seiten des Grundkörpers ausgebildet sein, von denen mindestens einer der gesinterte Schneidkörper aus dem Hartmetall oder Cermet ist, und im Kollisionsfalle von einer schneidaktiven Position in eine schneidpassive Position zum Schutze dieser wechseln, weil die Ausnehmung für eine entsprechende Dreh- und Längsbewegung ausgebildet ist. Besonders vorteilhaft ist es dabei, wenn die so geformte Ausnehmung um den Schwerpunkt des Schneidelements symmetrisch ausgebildet ist.

Diese Weiterbildung wird noch weiter verbessert, wenn zwei der gegenüberliegenden Seiten des Grundkörpers im Wesentlichen parallel zueinander ausgebildet sind, der gesinterte Schneidkörper aus dem Hartmetall oder Cermet an einer dieser Seiten ausgebildet ist und die Ausnehmung derart länglich ausgeformt ist, dass sich ihre langen Seiten im Wesentlichen parallel zu den im Wesentlichen parallelen Seite des Grundkörpers erstrecken.

Die Aufgabe wird auch durch die Verwendung nach Anspruch 14 gelöst, also die Verwendung mindestens eines Schneidelements nach Anspruch 1 oder einem davon abhängigen Anspruch oder den hier offenbarten Weiterbildungen oder Ausführungsformen des Schneidelements zum Schneiden von Grashalmen oder anderen organischen Halmmaterialien an einer Vegetationsfläche. Das Schneidelement wird also zum Schneiden dieser Materialien verwendet, wobei der gesinterte Schneidkörper aus dem Hartmetall oder Cermet dabei vorzugsweise schneidaktiv ist oder durch eine Veränderung der Einbaulage, sei es durch eine Drehung um eine Drehachse senkrecht oder parallel zur Schnittebene, des Schneidelements schneidaktiv wird. Im Falle der Verwendung zum Schneiden der Grashalme kann dies auch als Rasenmähen werden. Noch bevorzugter wird das Schneidelement zusammen mit einem Rotor einer mobilen Schneidevorrichtung verwendet, an welchem es flügelartig befestigt ist, insbesondere an einem Zapfen davon, am meisten bevorzugt ist es an dem Zapfen exzentrisch befestigt, zum Beispiel frei drehbar und durch Fliehkraft ausrichtbar.

Die Aufgabe wird auch durch die mobile Schneidevorrichtung, insbesondere einen Mähdrescher oder Mähroboter, nach Anspruch 15 gelöst.

Die mobile Schneidevorrichtung, insbesondere der Mähroboter, umfasst einen Rotor und mindestens ein daran derart befestigtes Schneidelement nach Anspruch 1 oder einem davon abhängigen Anspruch oder den hier offenbarten Weiterbildungen oder Ausführungsformen, dass durch eine Drehung des Rotors Grashalme oder andere organische Halmmaterialien an einer Vegetationsfläche durch das Schneidelement geschnitten werden können. Bei der mobilen Schneidevorrichtung kann es sich zum Beispiel um eine Mähmaschine handeln, zum Beispiel einen Mähdrescher, bei dem Mähroboter zum Beispiel um einen selbstfahrenden solchen mit einem Fahrwerk, einem Fahrantrieb dafür, einem Chassis, dem Rotor und einem Antrieb dafür, welcher besonders bevorzugt für das Rasenmähen ausgebildet ist. Im Falle des Mähroboters ist das Schneidelement an dem Rotor flügelartig befestigt, insbesondere an einem Zapfen davon, am meisten bevorzugt ist es an dem Zapfen exzentrisch befestigt, zum Beispiel frei drehbar und durch Fliehkraft ausrichtbar. Denkbar und auch möglich ist es, dass die mobile Schneidvorrichtung unmittelbar handführbar ausgebildet, zum Beispiel als Rasenschere.

Weitere Vorteile und Zweckmäßigkeiten der Erfindung ergeben sich anhand der nachfolgenden Beschreibung von Ausführungsbeispielen unter Bezugnahme auf die beigefügten Figuren.

Die Von den Figuren zeigen:
- Fig. 1:: eine perspektivische schematische Darstellung eines Schneidelements mit einem rechteckigen Grundkörper, an zwei gegenüberliegenden Seiten davon ausgebildeten Schneidkörpern und einer länglichen Ausnehmung gemäß dem Stand der Technik;
- Fig. 2:: eine perspektivische schematische Darstellung eines Schneidelements mit einem rechteckigen Grundkörper aus einem Stahl, an zwei gegenüberliegenden Seiten davon ausgebildeten Schneidkörpern aus einem gesinterten Hartmetall und einer länglichen Ausnehmung nach einer ersten Ausführungsform;
- Fig. 3:: eine perspektivische schematische Darstellung eines Schneidelements mit einem rechteckigen Grundkörper aus einem Stahl, an zwei gegenüberliegenden Seiten davon Schneidkörpern aus einem gesinterten Hartmetall und einer runden Ausnehmung nach einer zweiten Ausführungsform;
- Fig. 4:: eine perspektivische schematische Darstellung eines Schneidelements mit einem rechteckigen Grundkörper aus einem Stahl, an zwei gegenüberliegenden Seiten davon ausgebildeten Schneidkörpern aus einem gesinterten Hartmetall und zwei runden Ausnehmung nach einer dritten Ausführungsform;
- Fig. 5:: eine perspektivische schematische Darstellung eines Schneidelements mit einem trapezförmigen Grundkörper aus einem Stahl, an zwei gegenüberliegenden Seiten davon ausgebildeten Schneidkörpern aus einem gesinterten Hartmetall und zwei runden Ausnehmung nach einer vierten Ausführungsform;
- Fig. 6:: eine perspektivische schematische Darstellung eines Schneidelements mit einem rechteckigen Grundkörper aus einem Stahl, an zwei gegenüberliegenden Seiten davon ausgebildeten Schneidkörpern aus einem gesinterten Hartmetall, einem plattenförmigen Fortsatz des Grundkörper und einer runden Ausnehmung darin nach einer fünften Ausführungsform;
- Fig. 7:: eine perspektivische schematische Darstellung eines Schneidelements mit einem dreieckigen Grundkörper aus einem Stahl, an drei gegenüberliegenden Seiten davon ausgebildeten Schneidkörpern aus einem gesinterten Hartmetall und drei Ausnehmungen nach einer sechsten Ausführungsform; und
- Fig. 8:: eine perspektivische schematische Darstellung eines Schneidelements mit einem dreieckigen Grundkörper aus einem Stahl, an drei gegenüberliegenden Seiten davon ausgebildeten Schneidkörpern aus einem gesinterten Hartmetall und einer Ausnehmung im Form eines Dreiecks mit abgerundeten Ecken und von innen betrachtet konvexen Seiten nach einer siebten Ausführungsform.

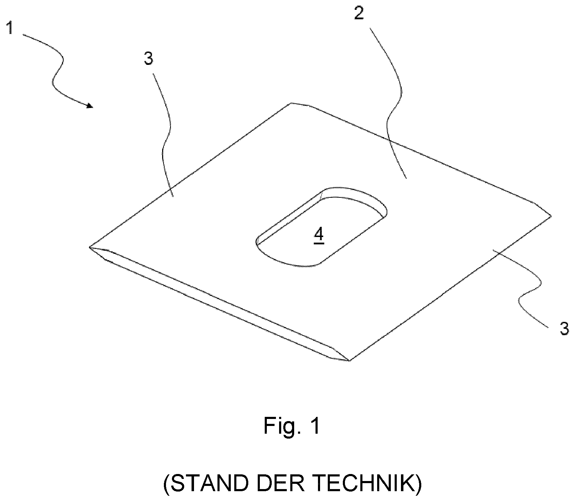

In den Fig. 1 bis 8 werden gleiche, ähnliche oder gleichwirkende Elemente mit identischen Bezugszeichen bezeichnet und eine wiederholte Beschreibung dieser Elemente wird in der nachfolgenden Beschreibung vermieden, um Redundanzen zu vermeiden.

Fig. 1 zeigt eine Darstellung eines Schneidelements 1 nach dem Stand der Technik. Das Schneidelement 1 weist einen plattenförmigen rechteckigen Grundkörper 2 auf. Zwei der gegenüberliegenden langen Seiten des Grundkörpers 2 verjüngen sich jeweils keilförmig symmetrisch nach außen. Dadurch werden dementsprechend zwei gegenüberliegende Schneidkörper 3 gebildet, durch welche Grashalme aber auch andere organische Halmmaterialien wie Getreide, Zuckerrohr oder Schilf geschnitten werden können. Dazu wird eine längliche Ausnehmung 4 des Grundkörpers 2 in Eingriff mit einem nicht dargestellten Zapfen eines nicht dargestellten Rotors einer nicht dargestellten Schneidevorrichtung, zum Beispiel eines Mähroboters, gebracht. Wenn der Rotor hinreichend schnell gedreht wird, richtet sich das Schneidelement 1 bezüglich einer Drehachse des Rotors radial nach außen aus; die Drehachse steht hier senkrecht zu der Plattenebene des Grundkörpers 2. Der Zapfen befindet sich dabei in einem der abgerundeten Bereiche der Ausnehmung 4, welche jeweils durch zwei abgerundete Ecken der Ausnehmung gebildet sind und ein Drehlager zum Drehen des Schneidelements 1 an und um den Zapfen bilden. Das Schneidelement 1 ist also an dem Zapfen exzentrisch gelagert, denn der Schwerpunkt des Schneidelements 1 befindet sich in der Mitte der Ausnehmung 4, diese ist also symmetrisch um den Schwerpunkt des Schneidelements 1 ausgeformt. Wenn einer der beiden Schneidkörper 3 beim Schneiden der Grashalme mit einem Stein kollidiert, wird das Schneidelement 1 um den Zapfen gedreht und gleitet dabei zugleich entlang der langen Seiten der Ausnehmung 4, im Falle eines dünnen Zapfens an nur einer dieser Seiten, hin zu dem anderen abgerundeten Bereich der Ausnehmung 4. Danach ist der Schneidkörper 3, welcher mit dem Stein kollidierte, bezüglich der in Fig. 1 gewählten Ansicht auf der anderen Seite, also schneidpassiv, positioniert, wohingegen der andere Schneidkörper 3, welcher dem Stein abgewandt war, nunmehr die Position des Schneidkörpers 3 einnimmt, der mit dem Stein kollidierte, also schneidaktiv positioniert ist.

In Fig. 1 ist besonders gut ersichtlich, dass die Schneidkörper 3 mit dem Grundkörper 2 materialnahtlos monolithisch verbunden sind, sie also aus dem Grundkörper 2 geformt sind. Die Schneidkörper 3 und der Grundkörper 2 bestehen also aus demselben Material.

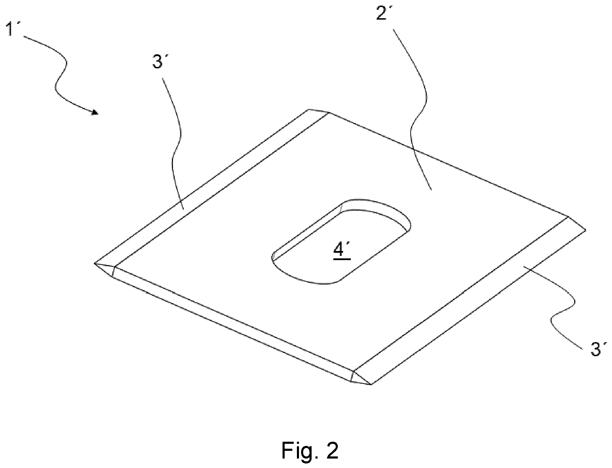

Fig. 2 zeigt eine Darstellung eines Schneidelements 1' nach einer ersten Ausführungsform. Das Schneidelement 1' weist dem Schneidelement 1 entsprechend einen plattenförmigen rechteckigen Grundkörper 2' auf. An den gegenüberliegenden langen Seiten des Grundkörpers 2' ist jeweils ein keilförmiger Schneidkörper 3' durch Einwirkung eines Energiestrahls befestigt. Denkbar und auch möglich ist aber auch, dass die Schneidkörper 3' durch Löten mit dem Grundkörper 2' verbunden sind. Die Schneidkörper 3' sind im Unterschied zu den Schneidkörpern 3 aus einem gesinterten Hartmetall gebildet, dementsprechend hart und verschleißfest sowie nachträglich, also nach deren Sinterung, mit dem Grundkörper 2' verbunden; die Hartstoffpartikel sind dabei durch Wolframkarbid gebildet und der Binder durch Cobalt. Der Grundkörper 2' besteht hingegen aus einem Stahl, er ist also gegenüber den Schneidkörpern 3' weicher, dämpft also in die Schneidkörper 3' eingebrachte Kollisionsenergie mittels Dissipation darin ab. Die Funktionsweise der in dem Grundkörper 2' ausgebildeten länglichen Ausnehmung 4', deren lange Seiten parallel zu den gesinterten Schneidkörpern 3' bzw. den entsprechenden Seiten des Grundkörpers 2' angeordnet sind und deren abgerundete Bereiche durch diese miteinander verbunden sind und als Drehlager für den Zapfen wirken, entspricht der der Ausnehmung 4 aus dem Stand der Technik.

In Fig. 2 ist ersichtlich, dass sich die Schneidkörper 3' jeweils keilförmig symmetrisch nach außen verjüngen und dadurch dementsprechende symmetrische Schneidkanten bilden. Der Keilwinkel dieser ist jeweils kleiner als 45°.

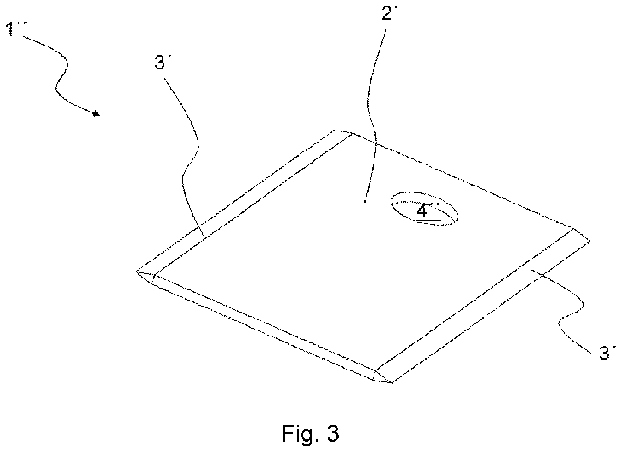

Fig. 3 zeigt eine Darstellung eines Schneidelements 1" nach einer zweiten Ausführungsform. Das Schneidelement 1" unterscheidet sich von dem Schneidelement 1' nur dadurch, dass eine Ausnehmung 4" in dem Grundkörper 2' von der Ausnehmung 4' verschieden ist. Die Ausnehmung 4" ist rund, wie dies durch eine einzelne senkrechte Bohrung bezüglich der Plattenebene des Grundkörpers 2" erhältlich ist. Die Ausnehmung 4" dient wie die Ausnehmung 4', wo diese die beiden abgerundeten Bereiche aufweist, als Drehlager, in welches der Zapfen eingreift. Bei der Kollision eines der gesinterten Schneidkörper 3' mit dem Stein wird das Schneidelement 1" um den Zapfen gedreht, wonach nach einer ganzen Umdrehung (360°) der kollidierte gesinterte Schneidkörper 3' weiterhin schneidaktiv ist. Ein Wechsel von dem schneidaktiven Schneidkörper 3' auf den zuvor schneidpassiven Schneidkörper 3', weil dem Halmmaterial abgewandt, kann dadurch realisiert werden, dass das Schneidelement 1" von dem Zapfen gelöst wird, sonach um 180° um eine Drehachse, welche parallel zu einer der langen Seiten des Grundkörpers 2" orientiert ist, gedreht wird und schließlich in dieser Lage mit dem Zapfen frei drehbar verbunden wird.

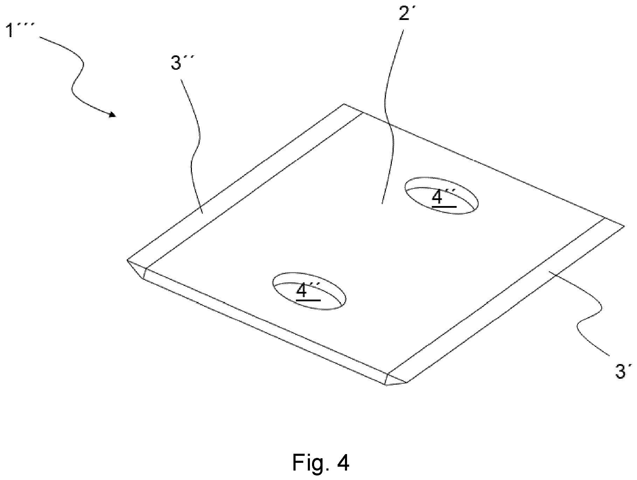

Fig. 4 zeigt eine Darstellung eines Schneidelements 1‴ nach einer dritten Ausführungsform. Das Schneidelement 1‴ unterscheidet sich von dem Schneidelement 1" nur dadurch, dass zwei der runden Ausnehmungen 4" in dem Grundkörper 2' ausgebildet sind, und zwar diametral zu einander sowie zum Schwerpunkt des Schneidelements 1‴ äquidistant, und dass sich den gesinterten Schneidkörpern 3' analoge gesinterte Schneidkörper 3" jeweils keilförmig asymmetrisch nach außen verjüngen und dadurch dementsprechende asymmetrische Schneidkanten bilden. Der Keilwinkel dieser ist jeweils kleiner als 45°.

Bei dem Schneidelement 1‴ kann ein Wechsel von einem schneidaktiven Schneidkörper 3" auf einen zuvor schneidpassiven anderen Schneidkörper 3" analog zu dem Schneidelement 1" realisiert wird, wobei der Zapfen vor und nach dem Wechsel mit derselben Ausnehmung 4" im Eingriff steht. Alternativ kann der Wechsel aber auch dadurch realisiert werden, dass das Schneidelement 1‴ von dem Zapfen gelöst wird, um 180° um eine Drehachse gedreht wird, die senkrecht zu der Plattenebene des Grundkörpers 2'steht, und sonach der Zapfen in die andere der Ausnehmungen 4" eingesetzt wird. Die gesinterten Schneidkörper 3", welche aus dem Material der Schneidkörper 3' bestehen und wie diese stoffschlüssig mit dem Grundkörper 2'verbunden sind, schließen mit dem Grundkörper 2' aufgrund ihrer asymmetrischen Form an der in Fig. 4 gezeigten Seite davon jeweils flächenbündig ab, so dass das Schneidelement 1‴ auch im Bereich der gesinterten Schneidkörper 3" auf dem Rotor flächig aufliegen kann.

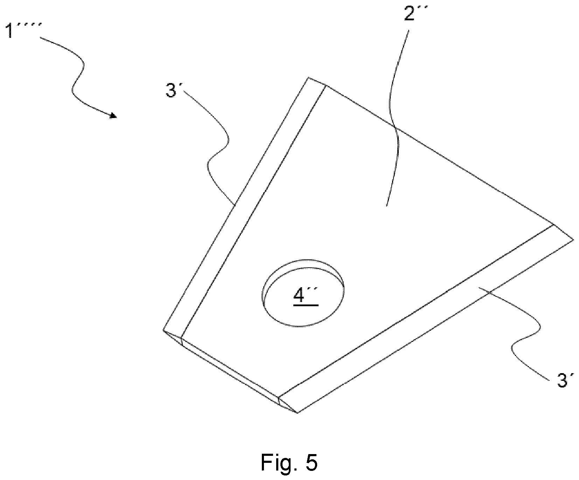

Fig. 5 zeigt eine Darstellung eines Schneidelements 1ʺʺ nach einer vierten Ausführungsform. Das Schneidelement 1ʺʺ weist einen trapezförmigen Grundkörper 2" auf, welcher wie der Grundkörper 2' aus Stahl besteht. An den schrägen Seiten davon sind die gesinterten Schneidkörper 3' den anderen Ausführungsformen entsprechend mit dem Grundkörper 2" stoffschlüssig verbunden. Die schrägen Seiten bilden dabei eine V-Form. Die runde Ausnehmung 4" ist außerhalb des Schwertpunkts des Schneidelements 1ʺʺ ausgebildet, so dass auch bei dem Schneidelement 1ʺʺ eine fliehkraftbedingte Ausrichtung davon bei einer Drehung des Rotors radial nach außen dazu erfolgt. Der Wechsel von dem schneidaktiven gesinterten Schneidkörper 3' auf einen zuvor schneidpassiven gesinterten Schneidkörper 3', welcher danach schneidaktiv wird, wird dem Schneidelement 1" entsprechend realisiert.

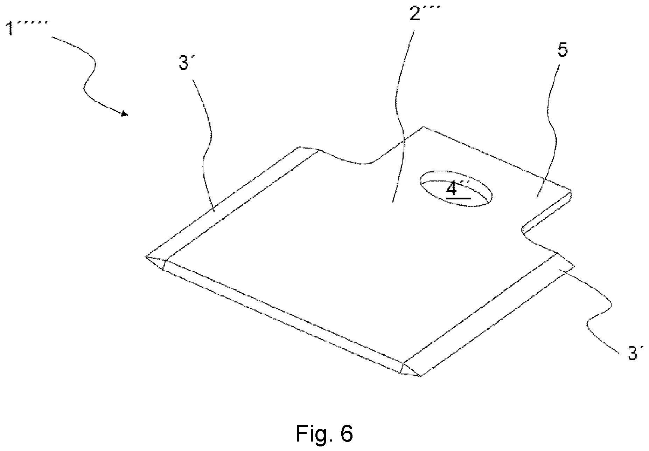

Fig. 6 zeigt eine Darstellung eines Schneidelements 1ʺ‴ nach einer fünften Ausführungsform. Im Unterschied zu dem Schneidelement 1" weist dieses einen rechteckigen plattenförmigen Grundkörper 2‴ mit einem plattenförmigen schmaleren Fortsatz 5 davon auf, welcher sich außerhalb der Seiten des Grundkörpers 2‴ befindet, an denen die gesinterten Schneidkörper 3' stoffschlüssig mit diesem verbunden ist; der Grundkörper 2‴ ist aus dem Stahl der anderen Ausführungsformen gebildet. Der Wechsel von einem schneidaktiven gesinterten Schneidkörper 3' auf einen zuvor schneidpassiven gesinterten Schneidkörper 3', welcher danach schneidaktiv wird, wird dem Schneidelement 1" entsprechend realisiert. Die runde Ausnehmung 4" ist außerhalb des Schwertpunkts des Schneidelements 1‴ʺ ausgebildet, so dass auch bei dem Schneidelement 1ʺ‴ eine fliehkraftbedingte Ausrichtung davon bei einer Drehung des Rotors radial nach außen dazu erfolgt.

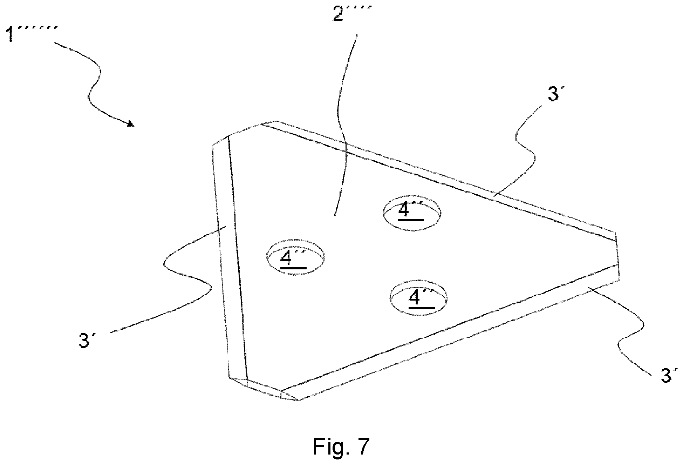

Fig. 7 zeigt eine Darstellung eines Schneidelements 1‴‴ nach einer sechsten Ausführungsform. Ein plattenförmiger Grundkörper 2ʺʺ des Schneidelements 1‴‴ ist in Form eines Dreiecks mit gerade abgeschnittenen Ecken ausgebildet. An den drei Hauptseiten des Grundkörper 2ʺʺ, welche paarweise eine V-Form bilden, sind insgesamt drei der gesinterten Schneidkörper 3' wie bei den anderen Ausführungsformen mit dem Grundkörper 2ʺʺ stoffschlüssig verbunden. Um den Schwerpunkt des Schneidelements 1‴‴ sind drei der runden Ausnehmungen 4" symmetrisch angeordnet. Der Wechsel von einem schneidaktiven gesinterten Schneidkörper 3' auf einen zuvor schneidpassiven gesinterten Schneidkörper 3', welcher danach schneidaktiv wird, wird dem Schneidelement 1ʺ entsprechend durch jede Ausnehmung 4" als solche realisiert und alternativ dazu durch einen Wechsel von der Ausnehmung 4", welche mit dem Zapfen ursprünglich im Eingriff steht, auf eine andere der Ausnehmungen 4''. Da jede der Ausnehmungen 4" außerhalb des Schwertpunkts des Schneidelements 1‴ʺ ausgebildet ist, erfolgt auch bei dem Schneidelement 1‴‴ eine fliehkraftbedingte Ausrichtung davon bei einer Drehung des Rotors radial nach außen dazu für jeden Eingriff in einer der Ausnehmungen 4".

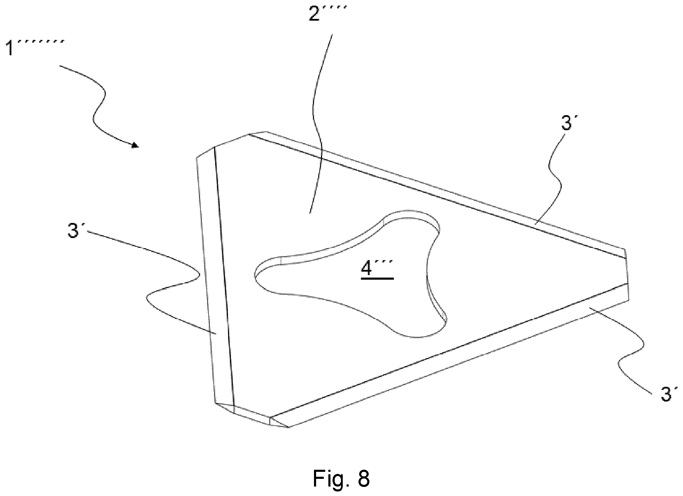

Fig. 8 zeigt eine Darstellung eines Schneidelements 1‴ʺʺ nach einer siebten Ausführungsform. Das Schneidelement 1‴ʺʺ unterscheidet sich von dem Schneidelement 1‴‴ nur dadurch, dass eine Ausnehmung 4‴ in dem Grundkörper 2ʺʺ ausgebildet ist, deren drei Ecken abgerundet sind und deren drei Seiten von innen aus der Ausnehmung 4ʺʺ betrachtet konvex gebogen sind. Jede der abgerundeten Ecken wirkt dabei der Ausnehmung 4" entsprechend als Drehlager für den Zapfen und ist einem der gesinterten Schneidkörper 3' gegenüberliegend angeordnet. Im Kollisionsfalle, dass einer dieser Schneidkörper 3' mit einem Stein kollidiert, kann der Zapfen entlang einer der konvexen Seite gleiten, bis er mit einer anderen der abgerundeten Ecken dort im Eingriff steht. Der Ausnehmung 4' entsprechend wird bei einer solchen Gleitbewegung in Kombination mit einer Drehung um den Zapfen sodann einer der zuvor schneidpassiven Schneidkörper 3' schneidaktiv und umgekehrt.

Denkbar und auch möglich ist es, dass bei den Fig. 2 bis 8 dargestellten Schneidelementen 1', 1", 1‴, 1ʺʺ, 1‴ʺ, 1‴‴ und 1‴ʺʺ auch nur einer der Schneidkörper 3' bzw. 3" gesintert ist und durch das Hartmetall gebildet ist.

## Patentansprüche

1. Schneidelement (1', 1", 1‴, 1ʺʺ, 1‴ʺ, 1‴‴, 1‴ʺʺ), welches derart ausgebildet ist, dass damit Grashalme oder andere organische Halmmaterialien an einer Vegetationsfläche geschnitten werden können, umfassend einen Grundkörper (2', 2", 2‴, 2ʺʺ), der durch ein Grundkörpermaterial gebildet ist, und an gegenüberliegenden Seiten des Grundkörpers (2', 2ʺ, 2‴, 2ʺʺ) ausgebildete Schneidkörper (3', 3"), wobei mindestens einer der Schneidkörper (3', 3") durch ein Schneidkörpermaterial gebildet ist, das von dem Grundkörpermaterial verschieden ist, gesintert ist und gegenüber dem Grundkörpermaterial härter ist, dadurch gegenzeichnet , dass das gesinterte Schneidkörpermaterial durch ein Hartmetall oder Cermet gebildet ist und die höhere Härte davon auf Hartstoffpartikeln darin basiert, wobei das Hartmetall und Cermet jeweils ein Verbundwerkoff ist, bei denen die Hartstoffpartikel, die den überwiegenden Bestandteil des Verbundwerkstoffs ausmachen, eine Skelett- oder Gerüststruktur bilden, deren Zwischenräume durch einen demgegenüber duktileren Binder gefüllt sind.

2. Schneidelement (1', 1", 1‴, 1ʺʺ, 1‴ʺ, 1ʺʺʺ, 1‴ʺʺ) nach Anspruch 1, **dadurch gekennzeichnet, dass** die Hartstoffpartikel des Hartmetalls im Wesentlichen durch Wolframkarbid gebildet sind.

3. Schneidelement (1', 1", 1‴, 1ʺʺ, 1‴ʺ, 1ʺʺʺ, 1ʺʺ‴) nach Anspruch 1 oder 2, **dadurch gekennzeichnet, dass** ein Binder in Zwischenräumen zwischen den Hartstoffpartikeln des Hartmetalls oder Cermets durch Cobalt, Nickel und/oder Eisen oder eine Basislegierung eines dieser Elemente gebildet ist.

4. Schneidelement (1', 1", 1‴, 1ʺʺ, 1‴ʺ, 1ʺʺʺ, 1‴ʺʺ) nach einem der vorhergehenden Ansprüche, **dadurch gekennzeichnet, dass** der gesinterte Schneidkörper (3', 3") aus dem Hartmetall oder Cermet mit dem Grundkörper (2', 2", 2‴, 2ʺʺ) stoffschlüssig verbunden ist.

5. Schneidelement (1', 1", 1‴, 1ʺʺ, 1‴ʺ, 1ʺʺʺ, 1‴ʺʺ) nach einem der vorhergehenden Ansprüche, **dadurch gekennzeichnet, dass** der gesinterte Schneidkörper (3', 3") aus dem Hartmetall oder Cermet mit dem Grundkörper (2', 2", 2‴, 2ʺʺ) stoffschlüssig verbunden ist, indem zumindest das Grundkörpermaterial durch Einwirkung eines Energiestrahls aufgeschmolzen wurde.

6. Schneidelement (1', 1", 1‴, 1ʺʺ, 1‴ʺ, 1ʺʺʺ, 1‴ʺʺ) nach einem der vorhergehenden Ansprüche, **dadurch gekennzeichnet, dass** der gesinterte Schneidkörper (3', 3") aus dem Hartmetall oder Cermet einen Keilwinkel aufweist, welcher kleiner oder gleich 60° und größer 0° ist, vorzugsweise kleiner oder gleich 45° und größer oder gleich 15°.

7. Schneidelement (1', 1", 1‴, 1ʺʺ, 1‴ʺ, 1ʺʺʺ, 1‴ʺʺ) nach einem der vorhergehenden Ansprüche, **dadurch gekennzeichnet, dass** die Hartstoffpartikel eine mittlere Korngröße von 0,5 µm bis 2 µm, vorzugsweise 0,8 µm bis 1,3 µm, haben.

8. Schneidelement (1', 1", 1‴, 1ʺʺ, 1‴ʺ, 1ʺʺʺ, 1‴ʺʺ) nach einem der vorhergehenden Ansprüche, **dadurch gekennzeichnet, dass** mindestens eine der Seiten des Grundkörpers (2', 2", 2"', 2ʺʺ) im Wesentlichen gerade ausgebildet ist oder mit der ihr gegenüberliegenden Seite des Grundkörpers (2', 2", 2"', 2ʺʺ) eine V-Form bildend ist, wobei der gesinterte Schneidkörper (3', 3") aus dem Hartmetall oder Cermet an der so geformten Seite des Grundkörpers (2', 2", 2‴, 2ʺʺ) ausgebildet ist.

9. Schneidelement (1', 1", 1‴, 1ʺʺ, 1‴ʺ, 1ʺʺʺ, 1‴ʺʺ) nach einem der vorhergehenden Ansprüche, **dadurch gekennzeichnet, dass** das Grundkörpermaterial durch einen Stahl gebildet ist.

10. Schneidelement (1', 1", 1‴, 1ʺʺ, 1‴ʺ, 1ʺʺʺ, 1‴ʺʺ) nach einem der vorhergehenden Ansprüche, **dadurchgekennzeichnet, dass** der Grundkörper (2', 2", 2‴, 2ʺʺ) mindestens eine Ausnehmung (4', 4", 4‴) aufweist, welche zur Befestigung des Schneidelements (1', 1", 1‴, 1ʺʺ, 1‴ʺ, 1ʺʺʺ, 1‴ʺʺ) an einem Rotor ausgebildet ist.

11. Schneidelement (1', 1", 1‴, 1ʺʺ, 1‴ʺ, 1ʺʺʺ, 1‴ʺʺ) nach Anspruch 10, **dadurch gekennzeichnet, dass** die Ausnehmung (4', 4", 4‴) mindestens zwei abgerundete Bereiche aufweist, durch die abgerundeten Bereiche jeweils ein Drehlager zur Drehung des Schneidelements (1'. 1". 1‴, 1ʺʺ, 1‴ʺ, 1ʺʺʺ, 1‴ʺʺ) um einen Zapfen des Rotors gebildet ist, die abgerundeten Bereiche durch eine davon verschieden ausgeformte Verbindungsseite der Ausnehmung (4', 4", 4‴) miteinander verbunden sind und der gesinterte Schneidkörper (3', 3") aus dem Hartmetall oder Cermet an der Seite des Grundkörpers (2', 2", 2‴, 2ʺʺ) ausgebildet ist, die der Verbindungseite oder einem der abgerundeten Bereiche gegenüberliegt.

12. Schneidelement (1', 1", 1‴, 1ʺʺ, 1‴ʺ, 1ʺʺʺ, 1‴ʺʺ) nach Anspruch 11, **dadurch gekennzeichnet, dass** die Verbindungsseite in Blickrichtung auf diese konvex gebogen ist und dass einer der abgerundeten Bereiche der Seite des Grundkörpers (2', 2", 2‴, 2ʺʺ) gegenüberliegt, an der der gesinterte Schneidkörper (3', 3") aus dem Hartmetall oder Cermet ausgebildet ist.

13. Schneidelement (1', 1", 1‴, 1ʺʺ, 1‴ʺ, 1ʺʺʺ, 1‴ʺʺ) nach Anspruch 11 oder 12, **dadurch gekennzeichnet, dass** die Verbindungsseite im Wesentlichen gerade ist und der Seite des Grundkörpers (2', 2", 2‴, 2ʺʺ) gegenüberliegt, an der der gesinterte Schneidkörper (3', 3") aus dem Hartmetall oder Cermet ausgebildet ist.

14. Verwendung mindestens eines Schneidelements (1', 1", 1‴, 1ʺʺ, 1‴ʺ, 1ʺʺʺ, 1‴ʺʺ) nach einem der Ansprüche 1 bis 13 zum Schneiden von Grashalmen oder anderen organischen Halmmaterialien an einer Vegetationsfläche.

15. Mobile Schneidevorrichtung, insbesondere Mähdrescher oder Mähroboter, umfassend einen Rotor und mindestens ein daran derart befestigtes Schneidelement (1', 1", 1‴, 1ʺʺ, 1‴ʺ, 1ʺʺʺ, 1‴ʺʺ) nach einem der Ansprüche 1 bis 13, dass durch eine Drehung des Rotors Grashalme oder andere organische Halmmaterialien an einer Vegetationsfläche durch das Schneidelement (1', 1", 1‴, 1ʺʺ, 1‴ʺ, 1ʺʺʺ, 1‴ʺʺ) geschnitten werden können.

## Claims

1. Cutting element (1', 1", 1‴, 1ʺʺ, 1‴ʺ, 1ʺʺʺ, 1‴ʺʺ) configured such that it may be used to cut grass stalks or other organic stalk materials in a vegetation area, comprising a main body (2', 2", 2‴, 2ʺʺ) formed by a main body material and cutting bodies (3', 3") formed on opposite sides of the main body (2', 2", 2‴, 2ʺʺ), wherein at least one of the cutting bodies (3', 3ʺ) is formed by a cutting body material which is distinct from the main body material, is sintered and is harder than the main body material, **characterized in that** the sintered cutting body material is formed by a hardmetal or cermet and the higher hardness thereof is based on hard material particles present therein, wherein the hardmetal and the cermet are both composite materials in which the hard material particles, which make up the predominant constituent of the composite material, form a skeleton or framework structure, whose interspaces are filled by a binder that is more ductile in comparison.

2. Cutting element (1', 1", 1‴, 1ʺʺ, 1‴ʺ. 1ʺʺʺ, 1‴) according to Claim 1, **characterized in that** the hard material particles of the hardmetal are substantially formed by tungsten carbide.

3. Cutting element (1', 1", 1‴, 1ʺʺ, 1‴ʺ, 1ʺʺʺ, 1‴ʺʺ) according to Claim 1 or 2, **characterized in that** a binder in interspaces between the hard material particles of the hardmetal or cermet is formed by cobalt, nickel and/or iron or an alloy based on one of these elements.

4. Cutting element (1', 1", 1‴, 1ʺʺ, 1‴ʺ, 1ʺʺʺ, 1‴ʺʺ) according to any of the preceding claims, **characterized in that** the sintered cutting body (3', 3") made of the hardmetal or cermet is joined to the main body (2', 2", 2‴, 2ʺʺ) by an atomic-level join.

5. Cutting element (1', 1", 1‴, 1ʺʺ, 1‴ʺ, 1‴‴, 1‴ʺʺ) according to any of the preceding claims, **characterized in that** the sintered cutting body (3', 3") made of the hardmetal or cermet is joined to the main body (2', 2", 2‴, 2ʺʺ) by an atomic-level join where at least the main body material has been melted by the action of an energy beam.

6. Cutting element (1', 1", 1‴, 1ʺʺ, 1‴ʺ, 1ʺʺʺ, 1‴ʺʺ) according to any of the preceding claims, **characterized in that** the sintered cutting body (3', 3") made of the hardmetal or cermet has a wedge angle of not more than 60° and more than 0°, preferably not more than 45° and not less than 15°.

7. Cutting element (1', 1", 1‴, 1ʺʺ, 1‴ʺ, 1‴‴, 1‴ʺʺ) according to any of the preceding claims, **characterized in that** the hard material particles have an average grain size of 0.5 µm to 2 µm, preferably 0.8 µm to 1.3 µm.

8. Cutting element (1', 1", 1‴, 1ʺʺ, 1‴ʺ, 1ʺʺʺ, 1‴ʺʺ) according to any of the preceding claims, **characterized in that** at least one of the sides of the main body (2', 2", 2‴, 2ʺʺ) is substantially straight or forms a V-shape with the opposite side of the main body (2', 2", 2‴, 2ʺʺ), wherein the sintered cutting body (3', 3") is formed from the hardmetal or cermet at the side of the main body (2', 2", 2‴, 2ʺʺ) having this shape.

9. Cutting element (1', 1", 1‴, 1ʺʺ, 1‴ʺ, 1ʺʺʺ,1‴ʺʺ) according to any of the preceding claims, **characterized in that** the main body material is formed by a steel.

10. Cutting element (1', 1", 1‴, 1ʺʺ, 1‴ʺ, 1‴‴, 1‴ʺʺ) according to any of the preceding claims, **characterized in that** the main body (2', 2", 2‴, 2ʺʺ) has at least one recess (4', 4", 4‴) configured for securing the cutting element (1', 1", 1‴, 1ʺʺ, 1‴ʺ, 1‴‴, 1‴ʺʺ) to a rotor.

11. Cutting element (1', 1", 1‴, 1ʺʺ, 1‴ʺ, 1‴‴, 1‴ʺʺ) according to Claim 10, **characterized in that** the recess (4', 4", 4‴) has at least two rounded regions, the rounded regions each form a pivot bearing for rotation of the cutting element (1', 1ʺ, 1‴, 1ʺʺ, 1‴ʺ,1ʺʺʺ, 1‴ʺʺ) around a pin of the rotor, the rounded regions are joined to one another by a distinctly formed connection side of the recess (4', 4ʺ, 4‴) and the sintered cutting body (3', 3ʺ) made of the hardmetal or cermet is formed at the side of the main body (2', 2ʺ, 2‴, 2ʺʺ) which is opposite the connection side or one of the rounded regions.

12. Cutting element (1', 1ʺ, 1‴, 1ʺʺ, 1‴ʺ, 1‴‴, 1‴ʺʺ) according to Claim 11, **characterized in that** the connection side has a convex curvature from an external point of reference and **in that** one of the rounded regions is opposite the side of the main body (2', 2", 2‴, 2ʺʺ) at which the sintered cutting body (3', 3") made of the hardmetal or cermet is formed.

13. Cutting element (1', 1", 1‴, 1ʺʺ, 1‴ʺ, 1ʺʺʺ, 1‴ʺʺ) according to Claim 11 or 12, **characterized in that** the connection side is substantially straight and is opposite the side of the main body (2', 2", 2‴, 2ʺʺ) at which the sintered cutting body (3', 3ʺ) made of the hardmetal or cermet is formed.

14. Use of at least one cutting element (1', 1", 1‴, 1ʺʺ, 1‴ʺ, 1‴‴, 1‴ʺʺ) according to any of Claims 1 to 13 for cutting grass stalks or other organic stalk materials in a vegetation area.

15. Mobile cutting apparatus, in particular a combine harvester or a robotic mower, comprising a rotor and at least one cutting element (1', 1", 1‴, 1ʺʺ, 1‴ʺ, 1‴‴, 1‴ʺʺ) according to any of Claims 1 to 13 which is attached thereto in such a way that rotation of the rotor allows grass stalks or other organic stalk materials in a vegetation area to be cut by the cutting element (1', 1", 1‴, 1ʺʺ, 1‴ʺ, 1‴‴, 1‴ʺʺ).

## Revendications

1. Élément de coupe (1', 1"**,** 1‴**,** 1ʺʺ, 1‴ʺ, 1‴‴, 1‴ʺʺ) réalisé pour pouvoir couper des tiges d'herbe ou d'autres matériaux de tige organiques sur une surface de végétation, comprenant un corps de base (2', 2"**,** 2‴**,** 2ʺʺ) formé par un matériau de corps de base et des corps de coupe (3', 3") réalisés sur des côtés opposés du corps de base (2', 2", 2‴, 2ʺʺ), au moins l'un des corps de coupe (3', 3") étant formé par un matériau de corps de coupe qui est différent du matériau de corps de base, est fritté et est plus dur que le matériau de corps de base, **caractérisé en ce que** le matériau de corps de coupe fritté est formé par un métal dur ou un cermet et sa dureté supérieure est basée sur des particules de matière dure qu'il contient, le métal dur et le cermet étant chacun une matière composite dans laquelle les particules de matière dure, qui représentent le constituant majeur de la matière composite, forment une structure de squelette ou d'ossature dont les interstices sont remplis par un liant plus ductile que celle-ci.

2. Élément de coupe (1', 1", 1‴, 1ʺʺ, 1‴ʺ, 1‴‴, 1‴ʺʺ) selon la revendication 1, **caractérisé en ce que** les particules de matière dure du métal dur sont essentiellement formées par du carbure de tungstène.

3. Élément de coupe (1', 1", 1‴, 1ʺʺ, 1‴ʺ, 1‴‴, 1‴ʺʺ) selon la revendication 1 ou 2, **caractérisé en ce qu'**un liant dans les interstices entre les particules de matière dure du métal dur ou du cermet est formé par du cobalt, du nickel et/ou du fer ou un alliage de base de l'un de ces éléments.

4. Élément de coupe (1', 1", 1‴, 1ʺʺ, 1‴ʺ, 1‴‴, 1‴ʺʺ) selon l'une quelconque des revendications précédentes, **caractérisé en ce que** le corps de coupe fritté (3', 3") en le métal dur ou le cermet est relié au corps de base (2', 2", 2‴, 2ʺʺ) par liaison de matière.

5. Élément de coupe (1', 1", 1‴, 1ʺʺ, 1‴ʺ, 1‴‴, 1‴ʺʺ) selon l'une quelconque des revendications précédentes, **caractérisé en ce que** l'élément de coupe fritté (3', 3") en le métal dur ou le cermet est relié au corps de base (2', 2", 2‴, 2ʺʺ) par liaison de matière, par le fait qu'au moins le matériau de corps de base est fondu sous l'effet d'un faisceau d'énergie.

6. Élément de coupe (1', 1", 1‴, 1ʺʺ, 1‴ʺ, 1‴‴, 1‴ʺʺ) selon l'une quelconque des revendications précédentes, **caractérisé en ce que** le corps de coupe fritté (3', 3") en le métal dur ou le cermet présente un angle de calage qui est inférieur ou égal à 60° et supérieur à 0°, de préférence inférieur ou égal à 45° et supérieur ou égal à 15°.

7. Élément de coupe (1', 1", 1‴, 1ʺʺ, 1‴ʺ, 1‴‴, 1‴ʺʺ) selon l'une quelconque des revendications précédentes, **caractérisé en ce que** les particules de matière dure ont une taille de grain moyenne de 0,5 µm à 2 µm, de préférence de 0,8 µm à 1,3 µm.

8. Élément de coupe (1', 1", 1‴, 1ʺʺ, 1‴ʺ, 1‴‴, 1‴ʺʺ) selon l'une quelconque des revendications précédentes, **caractérisé en ce qu'**au moins l'un des côtés du corps de base (2', 2", 2‴, 2ʺʺ) est réalisé essentiellement droit ou forme un V avec le côté du corps de base (2', 2", 2‴, 2ʺʺ) qui lui est opposé, le corps de coupe fritté (3', 3") en le métal dur ou le cermet étant réalisé sur le côté ainsi formé du corps de base (2', 2", 2‴, 2ʺʺ).

9. Élément de coupe (1', 1", 1‴, 1ʺʺ, 1‴ʺ, 1‴‴, 1‴ʺʺ) selon l'une quelconque des revendications précédentes, **caractérisé en ce que** le matériau de corps de base est formé par un acier.

10. Élément de coupe (1', 1", 1‴, 1ʺʺ, 1‴ʺ, 1‴‴, 1‴ʺʺ) selon l'une quelconque des revendications précédentes, **caractérisé en ce que** le corps de base (2', 2", 2‴, 2ʺʺ) présente au moins un évidement (4', 4", 4‴) qui est réalisé pour fixer l'élément de coupe (1', 1", 1‴, 1ʺʺ, 1ʺ‴, 1‴‴, 1ʺʺ‴) à un rotor.

11. Élément de coupe (1', 1", 1‴, 1ʺʺ, 1‴ʺ, 1‴‴, 1‴ʺʺ) selon la revendication 10, **caractérisé en ce que** l'évidement (4', 4", 4‴) présente au moins deux zones arrondies, un palier rotatif pour la rotation de l'élément de coupe (1', 1", 1‴, 1ʺʺ, 1‴ʺ, 1‴‴, 1‴ʺʺ) autour d'un tourillon du rotor étant formé par les zones arrondies, les zones arrondies étant reliées entre elles par un côté de liaison de l'évidement (4', 4", 4‴) de forme différente et le corps de coupe fritté (3', 3") en le métal dur ou le cermet étant réalisé sur le côté du corps de base (2', 2", 2‴, 2ʺʺ) qui est opposé au côté de liaison ou à l'une des zones arrondies.

12. Élément de coupe (1', 1", 1‴, 1ʺʺ, 1‴ʺ, 1‴‴, 1‴ʺʺ) selon la revendication 11, **caractérisé en ce que** le côté de liaison est courbé de manière convexe en regardant celui-ci et **en ce que** l'une des zones arrondies est opposée au côté du corps de base (2', 2", 2‴, 2ʺʺ) sur lequel le corps de coupe fritté (3', 3") est réalisé à partir du métal dur ou du cermet.

13. Élément de coupe (1', 1", 1‴, 1ʺʺ, 1‴ʺ, 1‴‴, 1‴ʺʺ) selon la revendication 11 ou 12, **caractérisé en ce que** le côté de liaison est essentiellement droit et est opposé au côté du corps de base (2', 2", 2‴, 2ʺʺ) sur lequel le corps de coupe fritté (3', 3") est réalisé à partir du métal dur ou du cermet.

14. Utilisation d'au moins un élément de coupe (1', 1", 1‴, 1ʺʺ, 1‴ʺ, 1‴‴, 1‴ʺʺ) selon l'une quelconque des revendications 1 à 13 pour couper des tiges d'herbe ou d'autres matériaux de tige organiques sur une surface de végétation.

15. Dispositif de coupe mobile, notamment moissonneuse-batteuse ou robot de coupe, comprenant un rotor et au moins un élément de coupe (1', 1", 1‴, 1ʺʺ, 1‴ʺ, 1‴‴, 1‴ʺʺ) selon l'une quelconque des revendications 1 à 13 fixé à celui-ci de telle sorte que, par une rotation du rotor, des tiges d'herbe ou d'autres matériaux de tige organiques peuvent être coupés sur une surface de végétation par l'élément de coupe (1', 1", 1‴, 1ʺʺ, 1‴ʺ, 1‴‴, 1‴ʺʺ).
